# EUROPÄISCHE PATENTANMELDUNG

(11) **EP 2 166 421 A1**
(43) Veröffentlichungstag der Anmeldung: **24.03.2010**
(21) Anmeldenummer: 08016614.3
(22) Anmeldetag: 22.09.2008
(51) Int. Cl.: G05B 19/418

(54) **Automatische Erstellung von Regeln für ein MES**

(71) Anmelder: Siemens Aktiengesellschaft, 80333 München (DE)
(72) Erfinder: Drumm, Oliver, 76344 Leopoldshafen (DE); Schneider, Martin, 75196 Remchingen (DE)
(74) Vertreter: Fischer, Michael

(57) **Zusammenfassung**

Verfahren zur Generierung von Regeln für ein MES (20), umfassend die Verfahrensschritte:
a) Bereitstellen eines R&I-Fliessbildes (15) einer verfahrenstechnischen Anlage, wobei das R&I-Fliessbild (15) eine Abbildung von miteinander verschalteten Anlagenelementen (11, 12, 13) der verfahrenstechnischen Anlage ist;
b) Zuordnen von Zuständen zu zumindest einer Auswahl der Anlagenelemente (11, 12, 13), wobei die Auswahl zumindest diejenigen Anlagenelemente (11, 12, 13) umfasst, welche einen Einfluss auf einen Materialfluss entlang eines Pfades in der verfahrenstechnischen Anlage haben;
c) automatisches Ermitteln mindestens einer Regel mittels eines Computersystems, welche den Materialfluss durch den Pfad anhand der Verschaltung und der Zustände der Anlagenelemente (11, 12, 13) bestimmt.

## Beschreibung

Die vorliegende Erfindung betrifft ein Verfahren und ein System zur Generierung von Regeln für ein Manufacturing Execution System (MES).

Schon bei der Basisplanung einer verfahrenstechnischen Anlage mit einem Computer-gestützten Werkzeug werden Informationen über den Verlauf der Materialien bzw. Massen berücksichtigt und in Form von R&I-Fliessbildern hinterlegt. In einem solchen R&I-Fliessbild sind die für die Produktion benötigten Anlagenelemente, beispielsweise Rohrleitungen, Ventile, Pumpen, Behälter oder auch Fliessbänder miteinander verbunden. Manche der Anlagenelemente können verschiedene Zustände aufweisen, beispielsweise kann ein ventil offen oder geschlossen sein. Ebenso kann ein Ventil zusätzlich eine abzählbare oder eine überabzählbare oder kontinuierliche Anzahl teilweise geöffneter Zustände aufweisen. Der Zustand des Ventils kann in diesem Fall durch die Ventilstellung beschrieben werden. Ein Behälter kann beispielsweise gefüllt oder leer sein. Ebenso sind zwischen einem vollen Behälter und einem leeren Behälter weitere Zustände möglich, welche einem teilweise gefüllten Behälter entsprechen. Ein Zustand einer Pumpe kann beispielsweise die momentane Leistung sein, mit welcher die Pumpe betrieben wird. Der Zustand eines Förderbandes kann beispielsweise die momentane Geschwindigkeit des Förderbandes sein. Auch kann ein Zustand eines Anlagenelementes eine mehrdimensionale Größe sein, beispielsweise wenn sich mehr als nur ein Parameter an dem Anlagenelement einstellen lässt.

Für die Errichtung eines MES in einer verfahrenstechnischen Anlage muss der Materialfluss innerhalb der Anlage bekannt sein. Diese Abläufe werden im MES in Form von Regeln modelliert, welche eine Pluralität von Zuständen von Anlageelementen auf einen Materialfluss abbilden, um damit zum Beispiel eine Materialverfolgung zu ermöglichen. In diesen Anlagen existiert zur Steuerung auch ein Leitsystem, das ebenfalls die Anlagenstruktur (wie z.B. in der ISA S88 und ISA S95 definiert) und die Produktionsabläufe aus der Sicht der Automatisierung abbildet. In der Regel erfolgt heute vielfach die Errichtung eines MES erst während des Betriebs und nicht wie die Automatisierung bereits im Laufe des Planungsprozesses der Anlage.

Bisher wurde zur Erstellung der Regeln für ein MES die bestehende, bereits automatisierte Anlage von Fall zu Fall analysiert und anschließend daraus die Regeln und Abhängigkeiten für das MES manuell entwickelt. So wird beispielsweise bei der Integration von SIMATIC IT, dem MES-Produkt der Firma Siemens, verfahren. Nachteilig an einer solchen Vorgehensweise ist, dass Logikfehler durch falsche Anlagenanalyse, einfache Kopierfehler und nicht berücksichtigte Wege des Massenflusses zu einem unvollständigen und/oder falschen Regelsatz für das MES führen können.

Der vorliegenden Erfindung liegt daher die Aufgabe zugrunde, diese Nachteile zu überwinden.

Diese Aufgabe wird durch die in den unabhängigen Ansprüchen angegebenen Maßnahmen gelöst. Vorteilhafte Ausgestaltungen der Erfindung sind in weiteren Ansprüchen angegeben.

Um diese Aufgabe zu lösen werden die folgenden Verfahrensschritte durchgeführt:
a) Bereitstellen eines R&I-Fliessbildes einer verfahrenstechnischen Anlage, wobei das R&I-Fliessbild eine Abbildung von miteinander verschalteten Anlagenelementen der verfahrenstechnischen Anlage ist;
b) Zuordnen von Zuständen zu zumindest einer Auswahl der Anlagenelemente, wobei die Auswahl zumindest diejenigen Anlagenelemente umfasst, welche einen Einfluss auf einen Materialfluss entlang eines Pfades in der verfahrenstechnischen Anlage haben;
c) automatisches Ermitteln mindestens einer Regel mittels eines Computersystems, welche den Materialfluss durch den Pfad anhand der Verschaltung und der Zustände der Anlagenelemente bestimmt.

Bei vielen verfahrenstechnischen Anlagen sind solche R&I-Fliessbilder bereits vor der Inbetriebnahme der Anlage vorhanden. Normalerweise werden sie im Rahmen der Basisplanung der Anlage mittels eines Computer-gestützten Werkzeugs (z.B. Computer Aided Design Werkzeuges oder Computer Aided Engineering Werkzeuges) erstellt.

Gemäß einer bevorzugten Ausführungsform umfasst die Auswahl der Anlageelemente die Auswahl sämtlicher Anlagenelemente der verfahrenstechnischen Anlage. Dadurch ergibt sich der Vorteil, dass nicht festgestellt werden muss, welche Anlagenelemente einen Einfluss auf den Materialfluss haben.

Gemäß einer weiteren bevorzugten Ausführungsform umfasst die Auswahl nur diejenigen Anlagenelemente, welche einen Einfluss auf den Materialfluss haben.

Gemäß einer weiteren bevorzugten Ausführungsform werden die in den Hauptansprüchen angeführten Verfahrensschritte b)und c) für mehrere oder für sämtliche möglichen Pfade des R&I-Fliessbildes ausgeführt und dadurch wird für jeden möglichen Pfad mindestens eine Regel oder ein vollständiger Regelsatz erstellt. Dabei können je nach Pfad unterschiedliche Selektionen der Anlagenelemente ausgewählt werden, um sicherzustellen, dass die Auswahl auch sämtliche Anlagenelemente umfasst, welche geeignet sind um den Materialfluss zu ermitteln. Durch die Erstellung einer Regel für jeden möglichen Pfad kann verhindert werden, dass einzelne Pfade oder besonders wichtige Pfade bei der Erstellung der Regeln vergessen werden.

Gemäß einer weiteren bevorzugten Ausführungsform werden die in den Hauptansprüchen aufgeführten Verfahrensschritte b) und c) ausserhalb des MES ausgeführt und die ermittelte(n) Regel(n) in das MES übermittelt.

Gemäß einer weiteren bevorzugten Ausführungsform werden die Regeln durch zusätzliche Informationen wie die relevanten Messstellen in den Pfaden vervollständigt. Das bedeutet, dass der Kontrollfluss und die Transitionen der Regeln durch die von den Messstellen gelieferten Messwerten gesteuert werden können. Dadurch ergibt sich der Vorteil, dass ein noch höherer Automatisierungsgrad des Engineerings erzielt werden kann.

Anhand einer geeigneten Auswahl von Anlagenelementen lässt sich aus den Zuständen und der Verschaltung der Anlagenelemente dieser Auswahl eine Regel ermitteln, welche einen Materialfluss durch einen Pfad der Verfahrenstechnischen Anlage beschreibt. Eine geeignete Auswahl ist typischerweise die Menge derjenigen Anlagenelemente, welche einen Einfluss auf den Materialfluss haben.

Gemäß einer bevorzugten Ausführungsform werden die Zustände sämtlicher Anlagenelemente der verfahrenstechnischen Anlage für die Berechnung eines Materialflusses zugrunde gelegt.

Gemäß einer weiteren bevorzugten Ausführungsform werden die Zustände sämtlicher Anlagenelemente der Ermittlung der Regeln zugrunde gelegt.

Gemäß einer bevorzugten Ausführungsform werden die Regeln anhand einer Pfadanalyse dieser R&I-Fliessbilder, des Prozesses, und der Kombinationsmöglichkeiten der Zustände der Anlagenelemente ermittelt.

Gemäß einer weiteren bevorzugten Ausführungsform werden die Regeln unter Verwendung von Algorithmen aus der Graphentheorie ermittelt. Diese Pfade und die daraus abgeleiteten Regeln für das MES bilden jedoch lediglich eine Basis und müssen noch durch zusätzliche Informationen wie zum Beispiel die relevanten Messstellen in den Pfaden vervollständigt werden. Eine automatische Generierung der Regeln reduziert dabei nicht nur den Engineeringaufwand, sondern es werden vielmehr auch Fehler in der Logik der Regelerstellung vermieden, die nachträglich nur aufwändig zu beseitigen sind.

Eine automatische Generierung der Regeln aus mit Hilfe von Computer Aided Engineering Werkzeugen erstellten R&I-Fliessbildern und einer daran anschließenden Einspeisung dieser Regeln in ein MES-System vereinfacht und beschleunigt den Engineering-Prozess einer MES-Installation erheblich und reduziert die Logikfehler durch falsche Anlagenanalyse und einfache Kopierfehler.

Indem sämtliche möglichen Pfade systematisch bestimmt werden, kann verhindert werden, dass einzelne Pfade oder besonders wichtige Pfade bei der Erstellung der Regeln vergessen werden.

Besonders vorteilhaft ist die Erfindung für verfahrenstechnische Anlagen, welche aus über Rohrleitungen und Ventilen verbundenen Behältern bestehen, da die Rohrleitungsverbindungen und Kombinationsmöglichkeiten aus Ventilstellungen den Materialflusspfaden entsprechen.

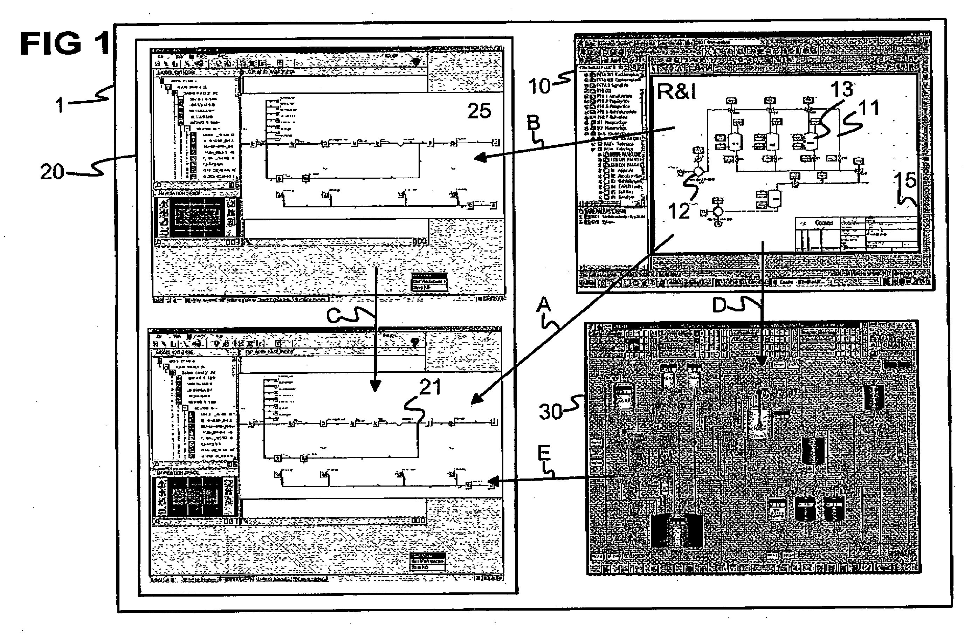

Die Erfindung wird nachfolgend anhand der Zeichnung beispielhaft näher erläutert. Dabei zeigt Figur 1 ein Verfahren und ein System, welches Regeln für ein MES automatisch generiert.

Figur 1 zeigt ein Verfahren und ein System 1, welches Regeln 21 für ein MES 20 automatisch generiert. Zunächst wird in einem Computer Aided Engineering Werkzeug 10 eine verfahrenstechnische Anlage in ein R&I-Fliessbild 15 abgebildet. Dabei werden insbesondere Rohrleitungen 11, Ventile 12 und Behälter 13 abgebildet.

Materialflüsse werden durch Pfade des R&I-Fliessbildes 15 dargestellt. Unter Verwendung der Pfade und Ventilstellungen werden Regeln für das MES automatisch generiert. Die Regeln werden danach in ein MES 20 übertragen.

Gemäß einer bevorzugten Ausführungsform werden die Regeln 21 für das MES direkt anhand des R&I-Fliessbildes erstellt, dargestellt durch den Pfeil A.

Gemäß einer weiteren bevorzugten Ausführungsform wird das Abbild der verfahrenstechnischen Anlage von dem R&I-Fliessbild 15 in einem Zwischenschritt in ein Anlagenmodell 25 des MES 20 abgebildet, dargestellt durch den Pfeil B. In einem weiteren Schritt werden dann anhand des Abbildes in dem Anlagenmodell 25 des MES 20 die Regeln 21 für das MES 20 erstellt, dargestellt durch Pfeil C.

Gemäß einer weiteren Ausführungsform wird das Abbild der verfahrenstechnischen Anlage von dem R&I-Fliessbild 15 in einem Zwischenschritt in ein Leitsystem 30 abgebildet, dargestellt durch den Pfeil D. Das Leitsystem 30 dient dabei der unmittelbaren Steuerung der Anlage, beispielsweise durch einen Menschen oder einen Computer. In einem weiteren Schritt werden dann anhand des Abbildes in dem Leitsystem 30 die Regeln 21 für das MES 20 erstellt, dargestellt durch Pfeil E.

Gemäß einer weiteren bevorzugten Ausführungsform werden Materialflüsse durch sämtliche möglichen Pfade des R&I-Fliessbildes 10 dargestellt und daraus algorithmisch Regeln generiert und in das MES 20 übertragen.

Gemäß einer weiteren bevorzugten Ausführungsform werden die Regeln 21 aus Kombinationsmöglichkeiten aus Ventilstellungen und möglichen Pfaden abgeleitet.

### Liste der verwendeten Bezugszeichen

- 1: System
- 10: Computer Aided Engineering Werkzeug
- 11: Rohrleitung
- 12: Ventil
- 13: Behälter
- 15: R&I-Fliessbild
- 20: MES
- 21: Regel
- 25: Anlagenmodell eines MES
- 30: Leitsystem

## Patentansprüche

**1.** Verfahren zur Generierung von Regeln für ein MES (20), umfassend die Verfahrensschritte:
a) Bereitstellen eines R&I-Fliessbildes (15) einer verfahrenstechnischen Anlage, wobei das R&I-Fliessbild (15) eine Abbildung von miteinander verschalteten Anlagenelementen (11, 12, 13) der verfahrenstechnischen Anlage ist;
b) Zuordnen von Zuständen zu zumindest einer Auswahl der Anlagenelemente (11, 12, 13), wobei die Auswahl zumindest diejenigen Anlagenelemente (11, 12, 13) umfasst, welche einen Einfluss auf einen Materialfluss entlang eines Pfades in der verfahrenstechnischen Anlage haben;
c) automatisches Ermitteln mindestens einer Regel mittels eines Computersystems, welche den Materialfluss durch den Pfad anhand der Verschaltung und der Zustände der Anlagenelemente (11, 12, 13) bestimmt.

**2.** Verfahren nach Anspruch 1,
**dadurch gekennzeichnet, dass**
die Auswahl sämtliche Anlagenelemente der verfahrenstechnischen Anlage umfasst.

**3.** Verfahren nach Anspruch 1,
**dadurch gekennzeichnet, dass**
die Auswahl nur diejenigen Anlagenelemente umfasst, welche einen Einfluss auf den Materialfluss haben.

**4.** Verfahren nach Anspruch 1 oder 2,
**dadurch gekennzeichnet, dass**
die Verfahrensschritte b)und c) für sämtliche möglichen Pfade des R&I-Fliessbildes (15) ausgeführt werden, und **dadurch** für jeden möglichen Pfad mindestens eine Regel erstellt wird.

**5.** Verfahren nach einem der vorhergehenden Ansprüche,
**dadurch gekennzeichnet, dass**
die Verfahrensschritte b) und c) ausserhalb des MES ausgeführt werden und die ermittelte mindestens eine Regel in das MES übermittelt wird.

**6.** Verfahren nach einem der vorhergehenden Ansprüche,
**dadurch gekennzeichnet, dass**
die Verfahrensschritte a) und b) in dem MES ausgeführt werden.

**7.** Verfahren nach einem der vorhergehenden Ansprüche,
**dadurch gekennzeichnet, dass**
die Regel unter Verwendung von Algorithmen aus der Graphentheorie ermittelt werden.

**9.** Verfahren nach einem der vorhergehenden Ansprüche,
**dadurch gekennzeichnet, dass**
die Regeln durch zusätzliche Informationen, wie die relevanten Messstellen in den Pfaden vervollständigt werden.

**10.** System (1) zur Durchführung eines Verfahrens gemäss einem der vorangehenden Ansprüche, umfassend Mittel, welche adaptiert sind, jeden der Schritte eines Verfahrens gemäss einem der vorangehenden Ansprüche auszuführen.
